# EUROPEAN PATENT APPLICATION

(11) **EP 2 164 008 A2**
(43) Date of publication of application: **17.03.2010**
(21) Application number: 09168766.5
(22) Date of filing: 26.08.2009
(51) Int. Cl.: G06F 17/30

(54) **System and method for transforming web page objects**

(30) Priority: 10.09.2008 EP 08015887
(71) Applicant: ADVANCED DIGITAL BROADCAST S.A., 1292 Pregny-Chambesy (CH)
(72) Inventor: Wielgosz, Marcin, 65-012, Zielona Gora (PL); Iwanicki, Adam, 16-400, Suwalki (PL)
(74) Representative: Hudy, Ludwik

(57) **Abstract**

The invention concerns a method for displaying web page content, the method comprising the steps identifying at least one web page object to be displayed and the steps of rendering, by the browser, the at least one web page object in order to obtain a graphics representation of the at least one web page object and receiving the graphics representation from the browser are executed. The method further includes creating an object, analysing definition, of the at least one web page object, for presence of transformation related parameters and transforming the object, according to the additional parameters, into a transformed object. Moreover steps of applying the graphics representation as a texture to the transformed object, returning a graphics representation of the transformed object to a graphics composer and displaying a graphical representation of the transformed object by a graphics displayer are executed.

## Description

Technical concept presented herein relates to graphics processing systems, and more particularly, to graphics processing systems performing processing and displaying of graphical objects, especially web page objects including but not limited to text, images, tables, headings etc.

It is common knowledge that objects on a web page are defined using HTML (Hyper-Text Markup Language). In the early times of the Internet and web browsing software all elements and objects, of a web page, coded in HTML, were interpreted and rendered by web browsers. However this situation has changed dramatically with adoption of so called plug-ins. The plug-ins are computer programs which interact with a host application (a web browser or an email client, for example) to provide a given, usually very specific and sophisticated functions downloaded and/or executed "on demand". Applications support plug-ins for different reasons. Some of the main reasons include: enabling third-party developers to create capabilities to extend an application (typically a web browser), to support features yet unforeseen, to reduce the size of an application, and to separate source code from an application because of incompatible software licenses.

On the side of HTML, a developer of a web page may define an object, for example with EMBED or OBJECT tags so that this object will be handled fully by a plug-in. For example such object may be a Flash application.

Flash is a technology presently offered and developed by Adobe Inc. It is a technology separate from HTML and requires special training and skills in addition to typical HTML coding skills required to prepare a web page.

However, technologies similar to Flash have significant drawbacks. They require specially prepared data that are separately supplied from the host of a web page or remote hosts. Data format is in most cases proprietary, sophisticated and expensive tools are required to prepare content in addition to skills in HTML coding. Moreover, complexity of web pages development is greatly increased.

Another problem, that sustains text-based web pages written in HTML, is the Internet bandwidth, which imposes simplicity of the three-dimensional elements, animations, interaction with content. There have been attempts to solve this problem by transferring the least possible data to the web browser, however these techniques usually use incremental compression and transfer of only the data which the user is accessing.

The benefit of plug-ins is addition of new effects to displayed web pages or audio/video possibilities. However, this requires new tools and skills and support for many additional file formats.

On the other hand, capabilities of HTML are not that sophisticated to support various effects on objects since it is the intention of the standard to keep the HTML rather simple when compared to other programming languages.

Hence, there exists a problem of enhancing web pages at a level of HTML without a need for support of external file formats, communication mechanisms or new programming languages or coding environments.

It is therefore an object of the present invention to provide web pages objects transformations, which are to be defined at web page source code level. The web pages objects transformations is performed by a method for displaying web page content, which comprises the steps of: reading by a browser data representing a web page, analysing the content of the web page, identifying at least one web page object to be displayed, rendering by the browser the at least one web page object in order to obtain a graphics representation of the at least one web page object, receiving the graphics representation from the browser, creating an object to be transformed, analysing definition of the at least one web page object for presence of transformation related parameters, transforming the object according to the transformation related parameters, into a transformed object, applying the graphics representation as a texture to the transformed object, returning a graphics representation of the transformed object to a graphics composer, and displaying a graphical representation of the transformed object by a graphics displayer.

The graphics composer can be a part of the browser or software separate from the browser.

The graphics displayer can be a part of the browser or software separate from the browser.

Preferably, the transformation results in a three dimensional effect.

Preferably, the transformation related parameters are defined by means of HTML and/or CSS code.

It is favorable that the at least one web page object is any branch of a DOM tree.

In addition, the idea of the invention is a computer program comprising program code means for performing all the steps of the method described above when said program is run on a computer.

Furthermore, the idea of the invention is a computer readable medium having computer-executable instructions performing all the steps of the computer-implemented method described above.

This and other objects of the invention presented herein are accomplished in accordance with the principles of the presented technical concept by providing an improved system and method for transforming web page objects. Further details and features of the system and method, its nature and various advantages will become more apparent from the accompanying drawing, and the following detailed description of the preferred embodiments shown in a drawing, in which:
Figs. 1A to 1B show an example of typical web page objects rendering by a browser;
Figs. 2A to 2B present an example of web page objects rendering according to the new method;
Fig. 3A presents an example of typical web page objects rendering by a browser;
Fig. 3B presents an example of a three dimensional web page object rendering according to the new method;
Fig. 4 presents a block diagram of a typical method for displaying web page objects;
Fig. 5 presents a block diagram of a new method for displaying web page objects; and
Fig. 6 depicts an architecture diagram of modules.

In the following description of preferred embodiments, the word transformation is to include, without any other limitation, changing the appearance or form, changing the nature, function, or condition.

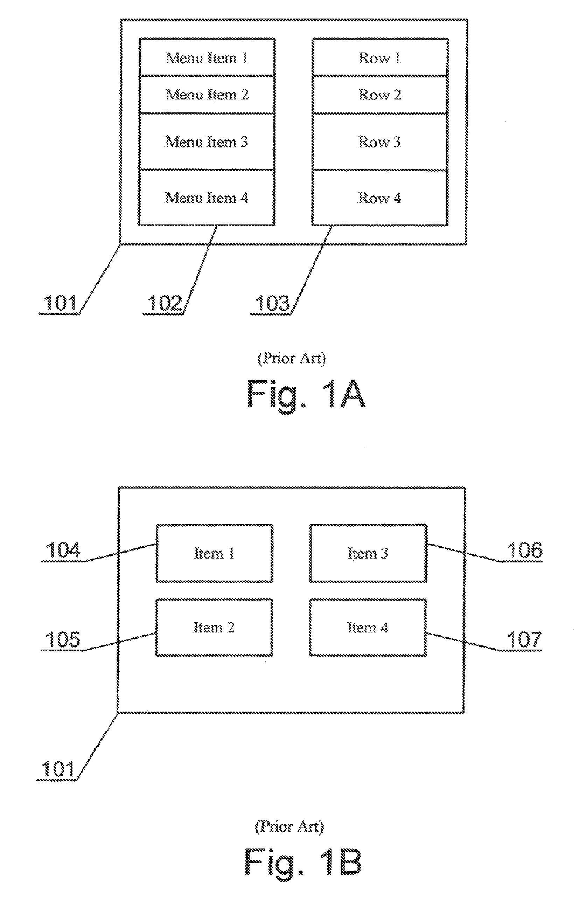

Figs. 1 A and 1 B present an example of typical web page objects rendering by a browser. Fig. 1A is a display 101 presenting a menu 102 and a table 103 whereas Fig. 1 B shows 4 items, for example pictures 104 - 107. All these web page objects are defined by standard HTML code, for example using a TABLE and IMAGE tags. A web page object can be any branch of a DOM (Document Object Model) tree.

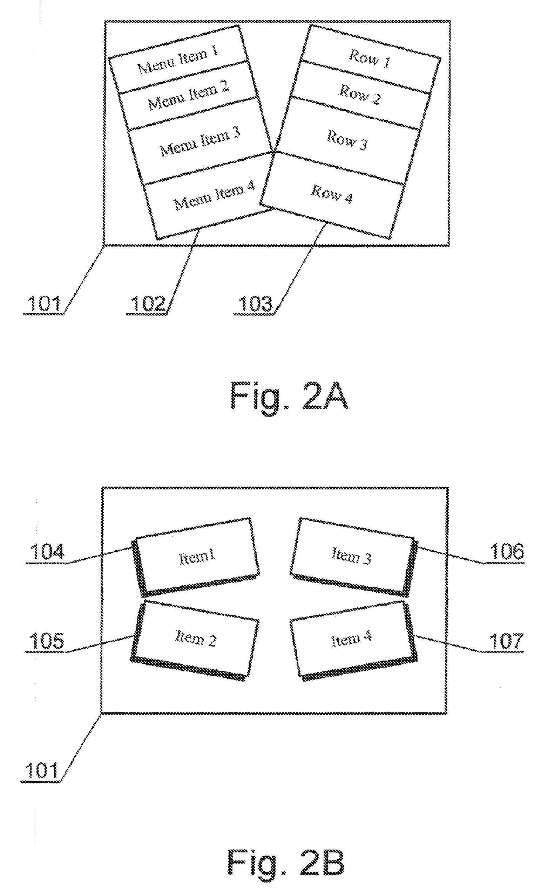

Figs. 2A to 2B present an example of web page objects rendering according to the new method. Fig. 2A shows the items 102 and 103 from Fig. 1A after transforming, namely after a rotation. Fig. 2B presents items 104 - 107 from Fig. 1 B after transformation where rotation and casting a shadow has been used.

The list of techniques and effects is not to be limited and may comprise any rotations and scaling in 3D space, Texture filtering, Perspective correction, Masking, Blending, Z-ordering, Camera animation, OpenGL alpha blending modes or Video stream as animated texture.

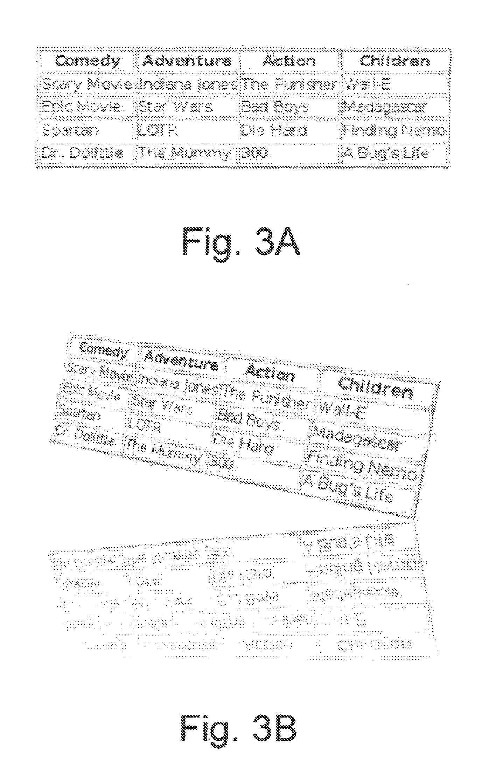

Fig. 3A presents an example of typical web page objects rendering by a browser. In this example there is a table comprising four data columns and four rows. Such a table can be easily defined, by one skilled in the art, using TABLE, TR and TD tags. For the purpose of the next example the table shall have its id equal to 'demo'.

The same table has been shown in Fig. 3B where a three dimensional rendering of the same HTML object is depicted. A further effect, applied to the HTML object is a mirror effect. Such an effect can be obtained by adding exemplary script function:

```
 <script>
 window.onunload = function() {
  mod.Deinit()
 }
 window.onload = function() {
  var rot = {}, rot1 = {}, rot2 = {};
  var tex = {}, rect = {}, mirror = {};
  mod.Init();
  mod.Texture_CreateFromElement(document.getElementById('demo'),
 tex) ;
  mod.Rectangle_CreateFromTexture(tex, rect);
  mod.TransformRotate_Create(00, 10, Z_AXIS, rot1);
  mod.TransformRotate_Create(00, 30, Y_AXIS, rot2);
  mod.TransformCombine(rot1, rot2, rot);
 vmod. Drawable_ApplyTransform (rect, rot);
  mod.Container_Add(rect);
  mod.Mirror Create(mirror);
  mod. Mirror_Add (mirror, rect);
  mod.Container Add(mirror);
 }
 </script>
```

The above script code creates a graphic representation of HTML object i.e. a texture by means of 'CreateFromElement' function. In a state of the art such graphics representations will be two-dimensional images. However the newer browsers may output different graphics representations.

Next, three transformation functions are invoked and subsequently the transformations defined are applied to the object. The 'Container_Add', 'Mirror_Create' and 'Mirror_Add' functions position and display the objects while the remaining mirror effect is drawn at the end.

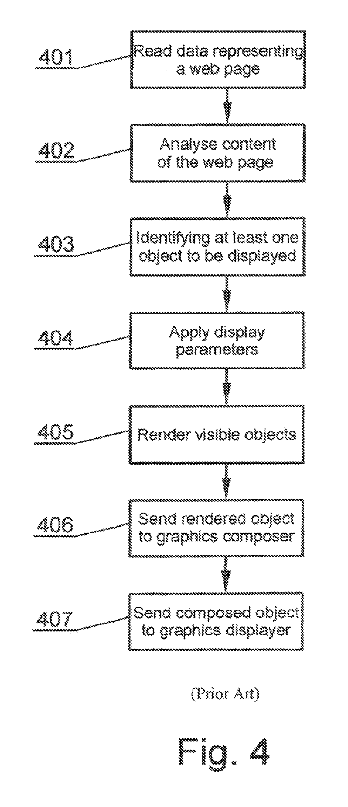

Fig. 4 presents a block diagram of a typical known method for displaying web page objects. The first step 401 is reading, by a browser application, data representing a web page. This may include a HTML file and associated filed including but not limited to JAVASCRIPT and/or CSS (Cascading Style Sheets) configuration. Next, in step 402, content of the web page is analysed. A typical web page contains numerous objects, which may be hidden or visible. This step is followed by extracting web page elements and identifying at least one object to be displayed 403.

The procedure goes further to step 404 where styles and other display parameters are applied. In step 405 the browser renders the visible web page objects.

Rendering by the browser means obtaining a graphics representation of the web page object. When an object is rendered its graphics representation is sent in step 406 to a graphics composer, which composes a web page to be displayed containing rendered graphics representations of objects. Composing process aggregates received graphics representations of the objects together, in order to form and output web page and subsequently pass the web page to a graphics displayer. The last step 407 is displaying graphics representations of the objects of the web page by the graphics displayer.

Executing of such a procedure results for example in displaying HTML object depicted in Fig. 3A.

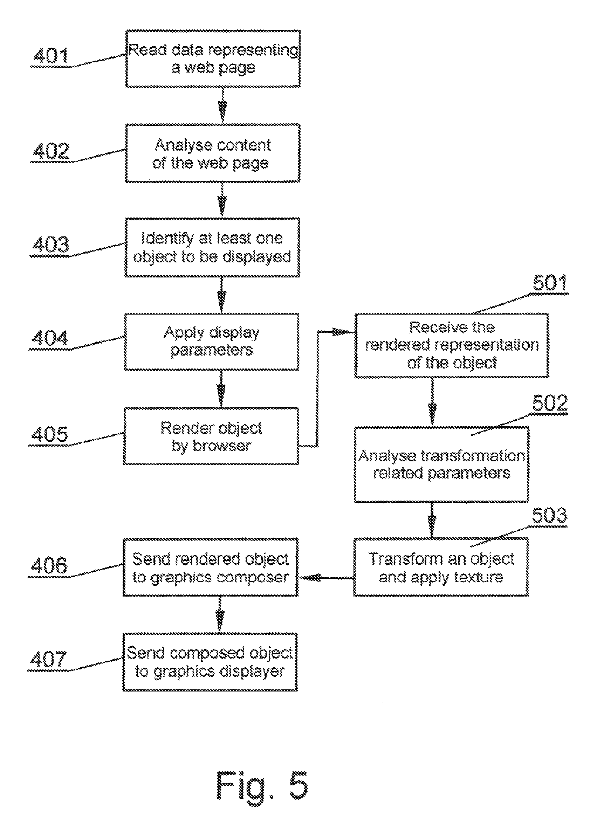

Fig. 5 presents a block diagram of a new method for displaying web page objects. Steps 401 to 405 remain the same as in the typical method. From step 405, where a graphics representation of the web page object is created by the browser, the procedure moves to step 501 where the graphics representation of the web page object is received from the browser, by a transformations plug-in. In the following step 502, transformations parameters for the web page object are analysed. The parameters will typically be defined in the HTML file containing the web page, but may be defined for example in a separate file, for example a CSS file or a script file.

In step 503 an object is created, which is transformed according to the parameters of step 502 and to which the graphics representation, received from the browser in step 501, will be applied as a texture. The texture will typically be a graphics image. Therefore parameters of the created object are, at least partially, derived from the graphics representation. The transformation parameters may define more parameters of the object.

It is to be noted that applying a texture to an object includes any processing, for example to fit the texture to a section of an object or the whole object.

From step 503, a graphics representation of the rendered object is sent in step 406 to a graphics composer, which composes a web page to be displayed. The last step 407 is displaying objects of the web page by the graphics displayer.

It is to be noted that the graphics composer and/or graphics displayer may be parts of the web browser software but also they may be separate from the browser.

Executing of such a procedure results for example in displaying HTML object depicted in Fig. 3B.

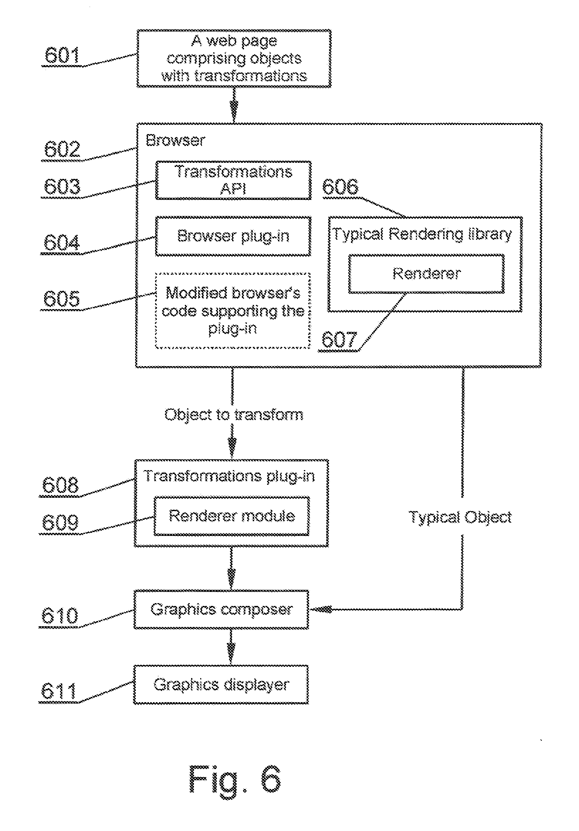

Fig. 6 depicts an architecture diagram of system modules according to the present invention. For the sake of simplicity some of typical browser modules, such as HTML parser, have not been shown. However they are common general knowledge readily available to one skilled in the art.

The architecture comprises several modules, namely a source being a web page, comprising objects with transformations 601, a browser 602 and modules from 608 to 611, namely a transformations plug-in, a renderer, graphics composer and displayer, that may be integrated within the browser 602 or be parts of separate modules.

The browser 602, besides typical modules known in the prior art, comprises a transformations API 603, in order to communicate with a transformations plug-in 604, added to the browser 602. Optionally the browser 602 may be modified, by adding modified browser's code 605 in order to support more functions or be closely integrated with the transformations processing system.

Additionally the browser 602 includes a rendering library 606 comprising a renderer module 607 for creating graphics representations of web page objects. The use of renderer has been presented with reference to Fig. 4 and Fig. 5.

In case of processing a typical web page object, the graphics representation of such object is passed directly to a graphics composer 610.

In another case, where an object to transform is detected, the graphics representation of the web page object is passed to a transformations module 608, which comprises another renderer module 609.

After the transformation the resulting graphics representation is passed to the graphics composer 610 and subsequently to a graphics displayer 611.

The method, according to the present invention, provides for enhanced interaction and connection with existing HTML code. Therefore it is platform independent. This results in that a page, comprising transforming tags and read by a compliant browser, will be displayed with effects whereas the same page, read by a non-compliant browser, will be displayed with the same content but without the transformation effects only.

Additional benefit is that content presented by typical plug-ins cannot be automatically indexed by search engines. With the present system, content can be indexed with the existing methods.

Another advantage is that methods of presentation are separated from content of web pages. The transformations are defined separately.

Moreover, due to only one rendering by the browser, the method of the present invention if much faster than present methods using, for example, JAVASCRIPT technology for drawing three dimensional objects.

It can be easily recognised, by one skilled in the art, that the aforementioned method may be performed by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

While the technical concept presented herein has been depicted, described, and has been defined with reference to particular preferred embodiments, such references and examples of implementation in the foregoing specification do not imply any limitation on the concept. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for displaying web page content, the method comprising the steps of:
• reading, by a browser, data representing a web page;
• analysing the content of the web page;
• identifying at least one web page object to be displayed;
• rendering, by the browser, the at least one web page object in order to obtain a graphics representation of the at least one web page object;
• receiving the graphics representation from the browser;
• creating an object to be transformed by applying, at least partially, parameters derived from the graphics representation;
• analysing definition, of the at least one web page object, for presence of transformation related parameters;
• transforming the object, according to the transformation related parameters, into a transformed object;
• applying the graphics representation as a texture to the transformed object;
• returning a graphics representation of the transformed object to a graphics composer; and
• displaying a graphical representation of the transformed object by a graphics displayer.

2. The method according to claim 1 **characterized in that** the graphics composer is a part of the browser.

3. The method according to claim 1 **characterized in that** the graphics composer is a software separate from the browser.

4. The method according to claim 1 **characterized in that** the graphics displayer is a part of the browser.

5. The method according to claim 1 **characterized in that** the graphics displayer is a software separate from the browser.

6. The method according to claim 1 **characterized in that** the transformation results in a three dimensional effect.

7. The method according to claim 1 **characterized in that** the transformation related parameters are defined by means of HTML and/or CSS code.

8. The method according to claim 1 **characterized in that** the at least one web page object is any branch of a DOM tree.

9. A computer program comprising program code means for performing all the steps of a method as claimed in any of claims 1 to 8 when said program is run on a computer.

10. A computer readable medium having computer-executable instructions performing all the steps of the computer-implemented method according to any of claims 1 to 8.
